# EUROPÄISCHE PATENTSCHRIFT

(11) **EP 1 750 187 B1**
(45) Veröffentlichungstag und Bekanntmachung des Hinweises auf die Patenterteilung: **28.12.2011**
(21) Anmeldenummer: 06114688.2
(22) Anmeldetag: 30.05.2006
(51) Int. Cl.: G05B 19/042

(54) **Regelungstechnische Einrichtung**
Control system
Dispositif de commande

(30) Priorität: 29.07.2005 DE 102005035667
(43) Veröffentlichungstag der Anmeldung: 07.02.2007
(73) Patentinhaber: Honeywell Technologies Sarl, 1110 Morges (CH)
(72) Erfinder: Rader, Michael Dipl.-Ing., 70569 Stuttgart (DE); Günter, Thomas Dipl.-Ing., 71101 Schönaich (DE)
(74) Vertreter: TBK

(56) Entgegenhaltungen:
- EP-A- 0 649 089
- US-A1- 2005 034 023
- US-A1- 2005 108 453
- MATURANA F ET AL: "Using dynamically created decision-making organizations (holarchies) to plan, commit, and execute control tasks in a chilled water system" DATABASE AND EXPERT SYSTEMS APPLICATIONS, 2002. PROCEEDINGS. 13TH INTE RNATIONAL WORKSHOP ON 2-6 SEPT. 2002, PISCATAWAY, NJ, USA,IEEE, 2. September 2002 (2002-09-02), Seiten 521-527, XP010612076 ISBN: 978-0-7695-1668-4

## Beschreibung

Die Erfindung bezieht sich auf die Regelung eines Regelungsprozesses mit Hilfe regelungstechnischer Einrichtungen, die jeweils zur Regelung eines Teilprozesses eines gemeinsamen Regelungsprozesses angepasst sind. Dem Regelungsprozess liegt eine zu regelnde Anlage zu Grunde, wie beispielsweise eine Heizungs-, Lüftungs- und/oder Klimaanlage.

Im Stand der Technik ist hierzu das Prinzip bekannt, eine regelungstechnische Lösung für eine derartige Anlage aus Einzelsegmenten aufzubauen. Dabei regeln die einzelnen Segmente jeweils einen vorbestimmten Teilprozess des der zu regelnden Anlage zu Grunde liegenden Regelungsprozesses. Damit die einzelnen Anlagensegmente zusammenwirken können, um den gemeinsamen Regelungsprozess durchzuführen, müssen sie entsprechend konfiguriert und aneinander angepasst werden. Dies erfolgt gemäß bekannten Lösungen auf manuelle Weise, d.h. die Ein-/Ausgänge und Parameter jedes Segments müssen einzeln und in Abhängigkeit von den anderen Analagensegmenten von einem Entwickler oder Bediener eingerichtet werden. Insbesondere muss dazu die Konfiguration der einzelnen Segmente untereinander, d.h. die Architektur bzw. Interaktion, manuell eingerichtet werden. Insbesondere vor der Inbetriebnahme eines neuen Regelungssystems ergibt sich daraus ein großer und damit teuerer Konfigurationsaufwand und auch die Gefahr von Konfigurationsfehlern.

Ein besonderes Problem in diesem Zusammenhang ergibt sich auch in dem Fall, dass ein oder mehrere Einzelsegmente innerhalb einer Gesamtregelung entfernt, modifiziert und/oder hinzugefügt werden. Dabei muss gegebenenfalls die gesamte Konfiguration des Regelungssystems vollständig manuell überarbeitet und entsprechend angepasst werden, was wiederum aufwendig und fehleranfällig ist.

Auch ergibt sich ein weiteres Problem bei bekannten Lösungen daraus, dass die Anlagensegmente von dem Konfigurationswerkzeug (z.B. einem Regelungs-Editor) abhängig sind, mittels dessen sie konfiguriert und angepasst werden, und von daher weder untereinander noch von ihrer Umgebung unabhängig sind.

Es ist folglich ein Nachteil des Standes der Technik, dass die Regelung eines Regelungsprozesses mit Hilfe einzelner regelungstechnischer Einrichtungen zur Regelung eines Teilprozesses schwierig, administrativ und zeitlich aufwendig, fehleranfällig, sowie unkomfortabel ist.

Weiterer Stand der Technik ist zum Beispiel bekannt aus der EP 0 649 089 A1, der US 2005/034023 A1 und der US 2005/108453 A1. Auch dieser kann jedoch die vorgenannten Nachteile nicht überwinden.

Dementsprechend liegt der Erfindung die Aufgabe zu Grunde, eine verbesserte regelungstechnische Einrichtung (mit einem verbesserten Betriebsverfahren) zu schaffen.

Die Aufgabe wird erfindungsgemäß mit der Einrichtung gemäß Patentanspruch 1.

Weitere vorteilhafte Ausführungsbeispiele der Erfindung sind in den abhängigen Patentansprüchen dargelegt.

Die Erfindung stellt eine informationstechnische Lösung der vorgenannten Aufgaben und Probleme dar. Sie schafft eine Konfiguration regelungstechnischer Einzelkomponenten zum automatischen Erzeugen einer funktionsfähigen Anlagenregelung (nach dem Prinzip von "plug-&-play").

Es ist ein Vorteil der Erfindung, dass die einzelnen regelungstechnischen Einrichtungen, die intelligente Anlagensegmente darstellen, unabhängig voneinander und von dem sie verwendenden Konfigurationswerkzeug entwickelt werden können. Auch können neue Anlagensegmente ohne Änderung an der Konfigurationsumgebung verwendet werden.

Es ist ein weiterer Vorteil der Erfindung, dass sich die regelungstechnischen Einrichtungen automatisch selbst untereinander verbinden können. Dadurch wird der Entwicklungsaufwand der Regelung der zu regelnden Anlage bei gleichzeitigem Ausschluss wesentlicher Fehlerquellen (durch Verringerung manuellen Konfigurationsaufwands) erheblich reduziert.

Damit verbunden sind auch wirtschaftliche Vorteile wie etwa eine schnellere Markteinführung neuer Anlagensegmente und Gesamtanlagenregelungen, sowie die erleichterte Anpassung an landestypische Anforderungen.

Es ist ein zusätzlicher Vorteil der Erfindung, dass durch Ausschluss von Fehlerquellen und durch automatisches Verbinden der einzelnen Anlagensegmente eine bessere Qualität der Regelung der Gesamtanlage und des zu Grunde liegenden Regelungsprozesses erreicht wird.

Dementsprechend stellt die Erfindung eine im Vergleich zum Stand der Technik erleichterte und verbesserte Regelung eines zu Grunde liegenden Regelungsprozesses bereit.

Im Folgenden werden bevorzugte Ausführungsbeispiele der Erfindung unter Bezugnahme auf die Zeichnung ausführlicher beschrieben.
Figur 1 zeigt ein intelligentes Anlagensegment gemäß einem Ausführungsbeispiel der Erfindung.
Figur 2 zeigt die Anordnung erfindungsgemäßer intelligenter Anlagensegmente zur Regelung einer Gesamtanlage.
Figur 3 zeigt beispielhaft eine Kopplung der intelligenten Anlagensegmente gemäß Figur 2.
Figur 4 zeigt eine Beispielkonfiguration erfindungsgemäßer Anlagensegmente.
Figur 5 zeigt ein Ablaufdiagramm eines Verfahrens gemäß einem Ausführungsbeispiel der Erfindung.
Figur 6 zeigt eine weitere Beispielkonfiguration erfindungsgemäßer Anlagensegmente mit bestehenden Verbindungen.

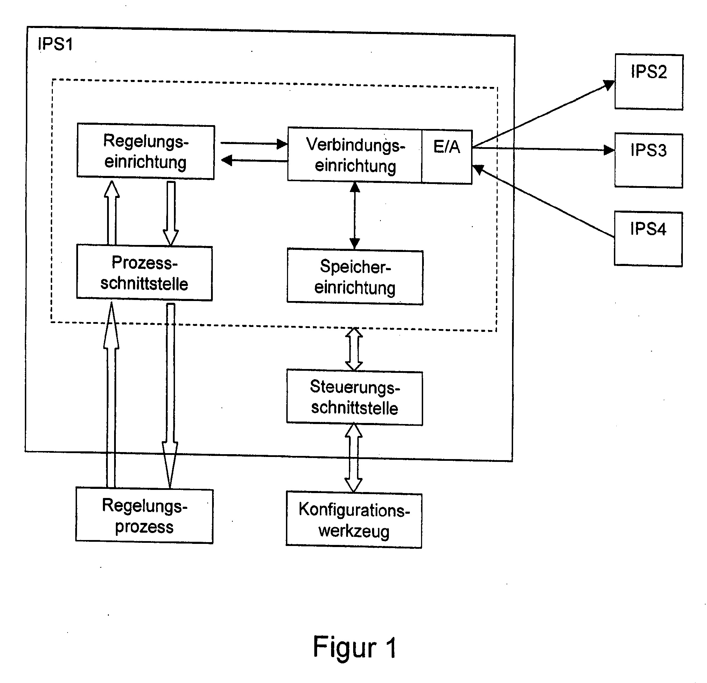

Gemäß Figur 1 ist ein Ausführungsbeispiel der erfindungsgemäßen regelungstechnischen Einrichtung, die im Folgenden auch als (intelligentes) Anlagensegment IPS ("Intelligent Plant Segment") bezeichnet wird, ausführlich dargestellt.

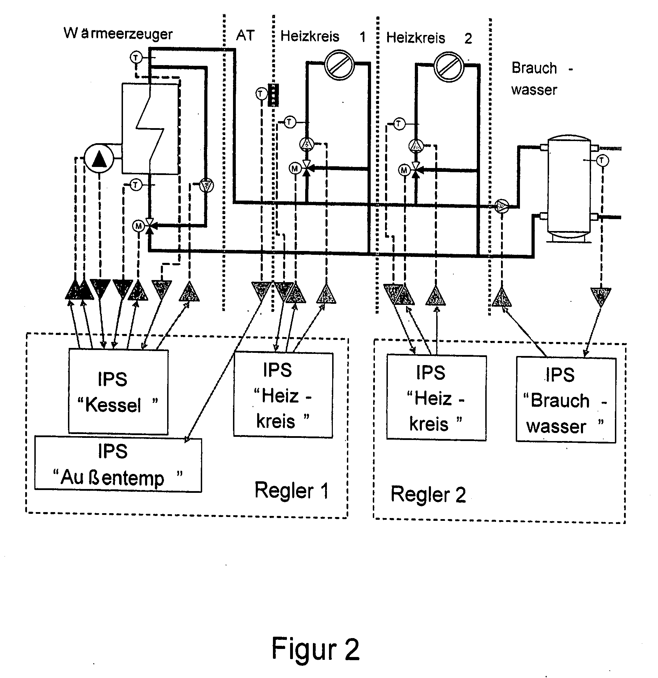

Demnach umfasst ein solches Anlagensegment IPS1 eine Regelungseinrichtung, die Regelungsalgorithmen zur Regelung des vorbestimmten Teilprozesses dieses Anlagensegments aufweist. Wie gemäß Figur 2 zu sehen ist, ist ein solcher Teilregelungsprozess bei einer Heizungsanlage zum Beispiel ein Kessel-, Heizkreis-, oder Brauchwasserregelungsprozess. Das dargestellte Anlagensegment umfasst ferner eine Prozessschnittstelle zur uni- oder bidirektionalen Übermittlung von Stell- und Messgrößen (d.h. Regelungsgrößen) zwischen dem Anlagensegment und dem durchzuführenden Regelungsprozess. Gemäß Figur 1 ist die Übermittlung von Regelungsgrößen zwischen dem Anlagensegment und dem Regelungsprozess über die Prozessschnittstelle mit Hilfe von beidseitig gerichteten Blockpfeilen dargestellt. Erfindungsgemäß umfasst ein intelligentes Anlagensegment eine Verbindungseinrichtung, deren Aufgabe es ist, bei Bedarf automatisch mindestens eine Verbindung zu mindestens einem weiteren intelligentes Anlagensegment in dem Regelungssystem herzustellen. Dies erfolgt über vorgegebene Verbindungspunkte an dem Anlagensegment, d.h. Eingänge und Ausgänge (E/A), die von der Art des jeweiligen Anlagensegments und dessen Konfiguration abhängen, wie es nachfolgend zu sehen ist. Das Herstellen einer Verbindung durch die Verbindungseinrichtung umfasst z.B. die Festlegung von Zeitpunkt, Ablauf und Form der Kommunikation sowie ggf. Initialisierungsvorgänge.

Gemäß alternativen Ausführungsbeispielen der Erfindung kann die Logik, die mit dem Verbindungseinrichtungsvorgang in Zusammenhang steht, im Anlagensegment selbst, z.B. in der Verbindungseinrichtung, oder auch an einer zentralen Stelle des Systems angeordnet sein.

Gemäß Figur 1 sind beispielhaft drei Verbindungen zu drei weiteren intelligenten Anlagensegmenten dargestellt, deren innerer Aufbau dem des IPS1 entspricht. Da die Regelung des Teilregelungsprozesses von IPS1 auch von Daten anderer Anlagensegmente wie etwa IPS2, IPS3, IPS4 abhängen kann und umgekehrt, besteht zwischen der Verbindungseinrichtung und der Regelungseinrichtung eines erfindungsgemäßen Anlagensegments eine bidirektionale Kopplung.

Wie aus der folgenden Beschreibung ersichtlich wird, erfolgt der automatische Verbindungsaufbau durch die Verbindungseinrichtung gemäß vorbestimmten Funktionen (d.h. Verwendungszwecken) und Verbindungsvorschriften der jeweiligen vorgegebenen Verbindungspunkte. Diese sind bei dem dargestellten Ausführungsbeispiel in einer Speichereinrichtung des Anlagensegments gespeichert, das an der Verbindungseinrichtung angeschlossen ist, um die gespeicherten Informationen zu übermitteln.

Gemäß einem alternativen Ausführungsbeispiel der Erfindung, das der zentral angeordneten Verbindungslogik wie oben beschrieben entspricht, ist eine gemeinsame zentrale Speichereinrichtung aller oder einiger im System vorhandener Anlagensegmente bereitgestellt. Eine solche zentrale Speichereinrichtung ist außerhalb der einzelnen Anlagensegmente angeordnet.

Gemäß dem in Figur 1 dargestellten Ausführungsbeispiel eines intelligenten Anlagensegments umfasst dieses auch eine Steuerungsschnittstelle zu einem Konfigurationswerkzeug (z.B. einer Entwicklungsumgebung bzw. einem Engineeringtool), mittels dessen das Anlagensegment eingerichtet und konfiguriert (d.h. hinzugefügt, modifiziert und aus dem System entfernt) werden kann.

Das Konfigurationswerkzeug bzw. die Konfigurationsumgebung bildet einen Rahmen für die Konfiguration der einzelnen Anlagensegmente und der Regelung einer Gesamtanlage mit deren Hilfe. Die Entwicklung der einzelnen Anlagensegmente kann in einer anderen, z.B. einer C++-Entwicklungsumgebung erfolgen. Über die Konfigurationsumgebung kann der Entwickler der Regelungsanlage auf die (gemäß Figur 1 innerhalb eines gestrichelten Kastens veranschaulichten) Dienste des einzelnen Anlagensegments zugreifen, d.h. auf seine Regelungsalgorithmen, Verbindungen, Parameter, usw. Dieser Aufbau hat den Vorteil, dass das Anlagensegment seine (regelungstechnische) Umgebung nicht kennen muss, um zu funktionieren, und dazu lediglich die klar definierte Steuerungsschnittstelle zur Konfigurationsumgebung benötigt.

Figur 2 zeigt die Anordnung erfindungsgemäßer Anlagensegmente zur Regelung einer Gesamtanlage am Beispiel einer Heizungsanlage mit einem Kessel, zwei unabhängigen Heizkreisen, einem Brauchwasserbereiter und einem Außentemperaturfühler. Diese Beispielanlage liegt der folgenden Beschreibung exemplarisch zu Grunde.

Gemäß Figur 2 sind die einzelnen intelligenten Anlagensegmente zur Regelung vorbestimmter Teilprozesse des Gesamtregelungsprozesses als Blöcke dargestellt, die als "IPS *Teilprozess"* bezeichnet sind. Ferner ist die Schnittstelle zwischen der Gesamtanlage bzw. dem Gesamtregelungsprozess und den Anlagensegmenten durch Pfeile dargestellt, die die einzelnen Stell- und Messgrößen des Regelungsprozesses symbolisieren.

Außerdem ist gemäß Figur 2 dargestellt, dass ein oder mehrere Anlagensegmente in einem Regler implementiert sind. Daraus ergibt sich, dass die Anlagensegmente an sich unabhängig von dem die Regelung implementierenden Regler sind. Beispielhaft ist gemäß Figur 2 ein Regler1 dargestellt, der drei Anlagensegmente enthält, und ein Regler 2, der zwei weitere Anlagensegmente enthält. Das heißt, dass ein Anlagensegment seine Daten, Dienste bzw. regelungstechnischen Algorithmen auf ein Gerät, einen Regler, abbilden kann, auf dem sie dann ausgeführt werden. Die Fähigkeit der Abbildung kann entweder im Anlagensegment selbst oder in einem (nicht gezeigten) Konverter angeordnet sein, der mit dem Anlagensegment interagiert.

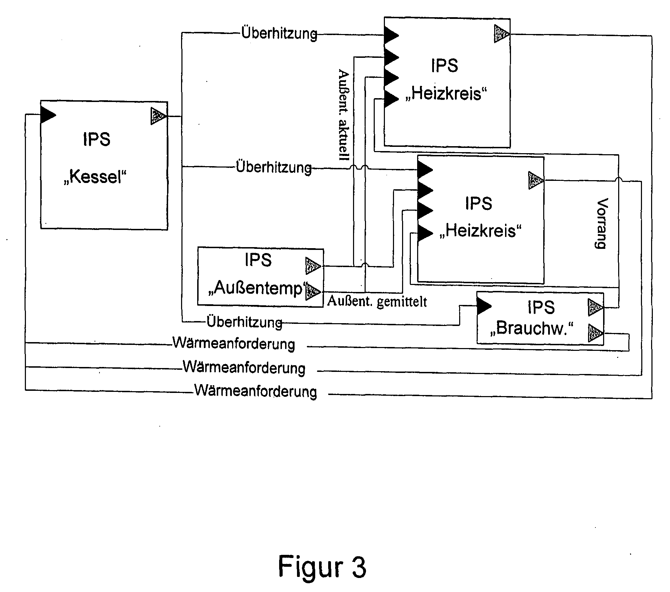

Damit die Gesamtanlage sinnvoll geregelt werden kann, müssen die Anlagensegmente jedoch nicht nur mit dem Prozess interagieren, sondern auch untereinander kommunizieren. Die Verbindungen der einzelnen Anlagensegmente untereinander, in deren automatischen Herstellung ein Aspekt der Erfindung besteht, sind gemäß Figur 2 aus Gründen der Übersichtlichkeit nicht dargestellt. Vielmehr zeigt Figur 3 beispielhaft eine Kopplung der intelligenten Anlagensegmente gemäß Figur 2.

Wie gemäß Figur 3 zu sehen ist, weist jedes Anlagensegment IPS einen oder mehrere (auf der rechten Seite des jeweiligen Blocks mit grauen Dreiecken dargestellte) Ausgänge und/oder einen oder mehrere (auf der linken Seite des jeweiligen Blocks mit schwarzen Dreiecken dargestellte) Eingänge auf. Verbindungen zwischen den Anlagensegmenten erfolgen zwischen Ausgängen (d.h. ausgehenden Verbindungspunkten) eines Anlagensegments und Eingängen (d.h. eingehenden Verbindungspunkten) eines anderen oder des selben Anlagensegmente. Dabei ist es erfindungsgemäß möglich (siehe unten), dass die Verbindung von Ausgang zu Eingang oder umgekehrt von Eingang zu Ausgang eingerichtet wird. Den einzelnen Verbindungen bzw. den auf diesen Verbindungen kommunizierten Signalen werden Funktionen bzw. Rollen zugewiesen, die den Verwendungszweck des jeweiligen Ein- oder Ausgangs definieren. Beispiele für solche Funktionen bzw. Rollen gemäß Figur 3 sind Wärmeanforderung, Überhitzung, Vorrang, Außentemperatur aktuell und Außentemperatur gemittelt.

Die Verbindungen und deren automatische Herstellung unterliegen vorbestimmten Verbindungsvorschriften, die für jeden Verbindungspunkt definiert sind. Solche Verbindungsvorschriften sind zum Beispiel die folgenden.
- Multiplizität: Ein Eingang kann entweder mit genau einem Ausgang ("one-to-one") oder mit mehreren Ausgängen ("many-to-one") verbunden werden. Im letzteren Fall wird der Eingangswert mittels einer Rechenvorschrift (Operation) aus den Einzelwerten gebildet. Ein Ausgang kann entweder mit genau einem Eingang ("one-to-one") oder mit mehreren Eingängen ("one-to-many") verbunden werden. Beispiel für eine Verbindung der Multiplizität "one-to-many" ist gemäß Figur 3 die Überhitzung und Beispiel für eine Verbindung der Multiplizität "many-to-one" ist gemäß Figur 3 die Wärmeanforderung.
- Typ: Eine Verbindung eines Eingangs bzw. eines Ausgangs kann verbindlich (Typ = Pflicht) oder wahlfrei (Typ = optional) sein.
- Suchausdehnung: Die Suchausdehnung definiert den Bereich, innerhalb dessen nach einem passenden Ausgang bzw. Eingang gesucht wird. Beispiele sind Anlage (d.h. innerhalb derselben Anlage), Regler (d.h. innerhalb desselben Reglers), Bus (d.h. in allen Anlagen in allen Reglern auf einem Bussystem) oder busübergreifend.
- Datentyp: Das auf der Verbindung zu kommunizierende Signal kann entweder analog oder digital sein.

Im Weiteren wird die Erfindung hauptsächlich mit Hinblick auf das erfindungsgemäße Verfahren beschrieben, wobei auch auf die erfindungsgemäße Einrichtung Bezug genommen wird.

Weitere Merkmale der erfindungsgemäßen Einrichtung und des Systems bestehend aus mehreren solchen Einrichtungen sind für den Fachmann demnach aus der Beschreibung des erfindungsgemäßen Verfahrens ersichtlich.

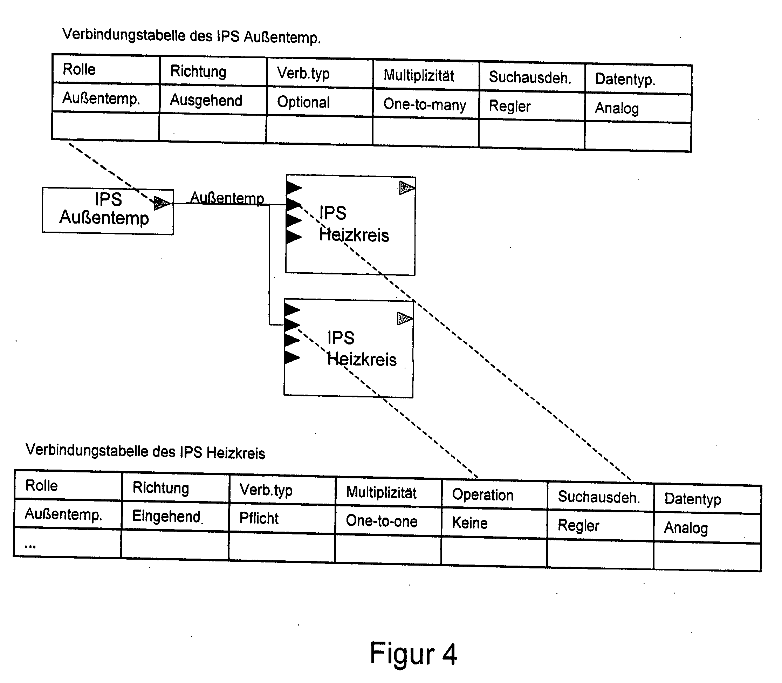

Figur 4 zeigt einen Teil einer Beispielkonfiguration erfindungsgemäßer Anlagensegmente gemäß Figuren 2 und 3.

Als Beispiel zur Beschreibung des erfindungsgemäßen Verfahrens wird im Hinblick auf Figur 4 ein Fall betrachtet, bei dem ein Anlagensegment "IPS Außentemperatur" nachträglich zu einem System hinzugefügt wird, das bis dahin aus zwei Anlagensegmenten "IPS Heizkreis" besteht. Aus Gründen einfacher Darstellung sind gemäß Figur 4 nur die (automatisch herzustellenden) Verbindungen zwischen den beteiligten Anlagensegmenten dargestellt.

Es ist zu sehen, dass das Anlagensegment "IPS Außentemperatur" wie jedes erfindungsgemäße Anlagensegment eine Verbindungstabelle aufweist, in der die eingehenden und ausgehenden Verbindungspunkte und die entsprechenden Verbindungsvorschriften des Anlagensegments hinterlegt sind. Das heißt, dass die Hinterlegung von Funktionen und Verbindungsvorschriften in jedem Anlagensegment selbst erfolgt. Bei dem gezeigten Beispiel weist "IPS Außentemperatur" eine ausgehende Verbindung mit der Funktion bzw. Rolle "Außentemperatur" auf, wobei diese Verbindung optional ist, der Ausgang mit mehreren Eingängen verbunden werden kann, die Suchausdehnung für einen passenden Eingang im Regler erfolgt und das zu übertragene Signal analog ist. Die beiden gezeigten Anlagensegmente "IPS Heizkreis" weisen ebenfalls eine (für beide identische) Verbindungstabelle für ihre Ein- und Ausgänge auf, wobei gemäß Figur 4 beispielhaft nur der Eintrag für einen eingehenden Verbindungspunkt "Außentemperatur" dargestellt ist.

Gemäß dem erfindungsgemäßen Verfahren zum Durchführen eines Regelungsprozesses mit Hilfe intelligenter Anlagensegmente läuft die automatische Verbindung mit einem passenden Eingang für jeden Ausgang des z.B. neu hinzugefügten Anlagensegments folgendermaßen ab.

Zunächst werden die jeweiligen Verbindungspunkte an dem betreffenden (z.B. hinzugefügten) Anlagensegment bestimmt und werden ihnen jeweils eine Funktion und vorbestimmte Verbindungsvorschriften zugeordnet. Hier wird davon ausgegangen, dass dies bereits geschehen ist und das Ergebnis von Bestimmung und Zuordnung in der Verbindungstabelle wie oben beschrieben vorliegt. Gemäß dem dargestellten Ausführungsbeispiel wird die Verbindungstabelle, in der diese Informationen hinterlegt sind, entsprechend ausgelesen.

Anschließend wird geprüft, ob es an einem der anderen vorhandenen Anlagensegmente einen dem ausgehenden Verbindungspunkt "Außentemperatur" des "IPS Außentemperatur" entsprechenden eingehenden Verbindungspunkt "Außentemperatur" gibt. Dies ist bei dem dargestellten Beispiel gemäß Figur 4 bei den beiden "IPS Heizkreis" der Fall. Mit anderen Worten wird nach einer Übereinstimmung zwischen den Funktionen bzw. Rollen von Verbindungspunkten gesucht.

Dann wird jeweils eine Verbindung zwischen den beiden entsprechenden Verbindungspunkten der jeweiligen Anlagensegmente gemäß der Funktion bzw. Rolle und den vorliegenden Verbindungsvorschriften laut Verbindungstabelle hergestellt.

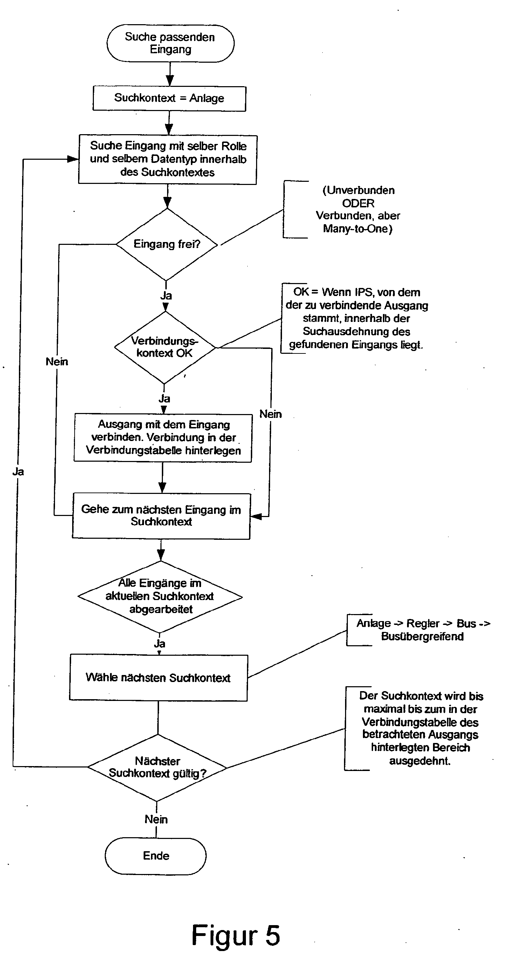

Figur 5 zeigt ein ausführliches Ablaufdiagramm eines erfindungsgemäßen Verfahrens zur automatischen Verbindung von IPS's gemäß einem Ausführungsbeispiel der Erfindung, hier speziell die Suche nach einem passenden Eingang zu einem gegebenen Ausgang. Eine detaillierte Beschreibung des Ablaufdiagramms wird hier nicht angegeben, da es für einen Fachmann selbsterklärend ist. Im Folgenden werden jedoch einige Aspekte des Ablaufs hervorgehoben.

Die Suche nach einem passenden Eingang, d.h. die Prüfung, erfolgt in einem bestimmten Suchkontext. Das heißt, in einem ersten Durchlauf werden passende Eingänge innerhalb der Anlage gesucht, anschließend innerhalb des Reglers, auf dem Bus und gegebenenfalls auch busübergreifend, je nachdem welche Suchausdehnung laut Verbindungstabelle des betreffenden Anlagensegments zulässig ist. In dem vorliegenden Beispielfall erfolgen Suchdurchläufe in der Anlage und danach im Regler.

Die Prüfung auf passende Eingänge umfasst eine Prüfung, ob der gefundene Eingang gemäß einer vorbestimmten Regel frei ist und ob der Verbindungskontext zulässig ist. Sind die Voraussetzungen erfüllt, erfolgt eine Verbindung und wird zum nächsten Eingang fortgeschritten. Sind die Voraussetzungen nicht erfüllt, wird zum nächsten Eingang fortgeschritten, ohne eine Verbindung herzustellen.

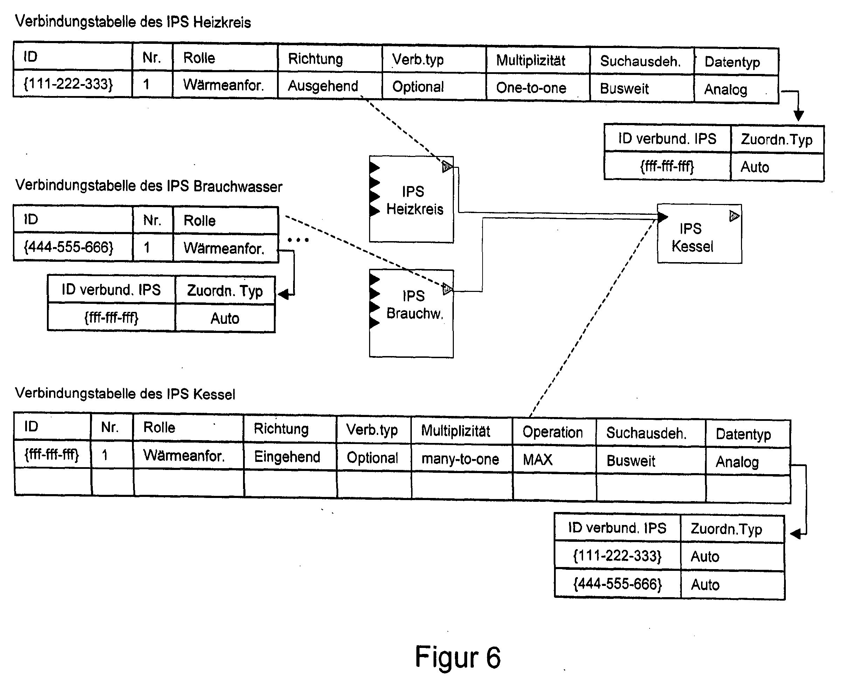

Bei Abschluss der Suche nach Eingängen, d.h. wenn alle Eingänge in allen zulässigen Suchkontexten abgearbeitet wurden, werden die hergestellte Verbindungen in der Verbindungstabelle von jedem beteiligten Anlagensegment als bestehende Verbindungen hinterlegt, wie es gemäß Figur 6 gezeigt und nachstehend beschrieben ist.

Als weiteres Beispiel für das erfindungsgemäße Verfahren wird ebenfalls im Hinblick auf Figur 4 ein Fall betrachtet, bei dem eines der Anlagensegmente "IPS Heizkreis" nachträglich zu einem System hinzugefügt wird, das bis dahin aus einem Anlagensegmenten "IPS Heizkreis" und einem Anlagensegment "IPS Außentemperatur" besteht.

Dabei läuft das Verfahren entsprechend demjenigen ab, das oben in Verbindung mit Figuren 4 und 5 beschrieben ist. Der Unterschied besteht lediglich darin, dass nun nach passenden Ausgängen für einen betreffenden Eingang gesucht wird, und nicht umgekehrt. Daher wird hier keine detaillierte Beschreibung dieses Verfahrens angegeben.

Obwohl oben nur Verbindungsherstellungen bei Verbindungen der Multiplizität "one-to-one" und "one-to-many" beschrieben sind, läuft das Verfahren auch bei Verbindungen der Multiplizität "many-to-one" gleichermaßen ab. Der Unterschied besteht lediglich darin, dass bei Erkennung einer derartigen Verbindung anhand der Verbindungstabelle des Anlagensegments mit dem betreffenden Eingang die entsprechende Rechenvorschrift bzw. Operation ausgewertet wird. Bei dem Verbindungspunkt "Wärmeanforderung" des "IPS Kessel" gemäß Figur 6 handelt es sich dabei beispielsweise um eine MAX-Operation, d.h. das Eingangssignal entsteht aus dem Maximum aller anliegenden Ausgangssignale.

Figur 6 zeigt eine weitere Beispielkonfiguration erfindungsgemäßer Anlagensegmente gemäß Figuren 2 und 3, wobei bereits bestehende Verbindungen angenommen werden.

Gemäß Figur 6 ist zu sehen, wie bestehende Verbindungen zwischen Anlagensegmenten in deren jeweiliger Verbindungstabelle hinterlegt sind. So wird an den Eintrag eines Verbindungspunkts in der Verbindungstabelle (zum Beispiel mittels eines Zeigers) eine Tabelle angehängt, die die bestehenden Verbindungen und deren Zuordnungstyp enthält. Der Zuordnungstyp gibt an, wie die jeweilige Verbindung hergestellt bzw. geändert wurde, z.B. automatisch oder manuell. Gemäß Figur 6 sind alle Verbindungen automatisch ("Auto") hergestellt bzw. geändert worden. Gemäß einem Ausführungsbeispiel erfolgt ein Verweis auf eine bestehende Verbindung speicherplatzsparend mit einem Identifikationsbezeichner ID des entsprechenden Verbindungspunkts am verbundenen Anlagensegment. Zum Beispiel ist der Eingang "Wärmeanforderung" vom "IPS Kessel" mit der ID {fff-fff-fff} versehen und verweist auf Verbindungen zu den Verbindungspunkten mit den ID's {111-222-333} (d.h. Ausgang "Wärmeanforderung" am "IPS Heizkreis") und {444-555-666} (d.h. Ausgang "Wärmeanforderung" am "IPS Brauchwasser"). Es ist zu beachten, dass für das "IPS Brauchwasser" nur ein Teil der Verbindungstabelle dargestellt ist.

Ausgehend von der dargestellten Situation gemäß Figur 6 wird ein Fall betrachtet, bei dem alle drei gezeigten Anlagensegmente im System vorhanden sind und die dargestellten Verbindungen untereinander aufweisen, aber das "IPS Kessel" gelöscht (entfernt) wird.

Dabei wird die Verbindungstabelle des "IPS Kessel" betrachtet. Für jeden Eingang und jeden Ausgang des "IPS Kessel" werden die verbundenen Ausgänge bzw. Eingänge ermittelt. Bei dem dargestellten Beispiel werden hier die folgende Verbindungen gefunden:
- verbundener Ausgang "Wärmeanforderung" des "IPS Heizkreis" mit ID {111-222-333}, und
- verbundener Ausgang "Wärmeanforderung" des "IPS Brauchwasser" mit ID {444-555-666}.
   Für jeden ermittelten verbundenen Eingang und Ausgang wird die entsprechende Verbindung zum zu löschenden Anlagensegment ausgetragen. Bei dem dargestellten Beispiel bedeutet das folgendes.
- Im "IPS Heizkreis" wird beim Ausgang "Wärmeanforderung" mit ID {111-222-333} die Verbindung zum Eingang mit ID {fff-fff-fff} am "IPS Kessel" entfernt, d.h. die angehängte Tabelle oder zumindest deren Inhalt freigegeben.
- Im "IPS Brauchwasser" wird beim Ausgang "Wärmeanforderung" mit ID {444-555-666} die Verbindung zum Eingang mit ID {fff-fff-fff} am "IPS Kessel" entfernt, d.h. die angehängte Tabelle oder zumindest deren Inhalt freigegeben.

Damit weist der Eingang "Wärmeanforderung" mit ID {fff-fff-fff} am "IPS Kessel" keine bestehenden Verbindungen mehr auf, d.h. ist getrennt, und das Anlagensegment "IPS Kessel" wird automatisch entfernt.

## Patentansprüche

1. Regelungstechnische Einrichtung zur Regelung eines vorbestimmten Teilprozesses eines Regelungsprozesses, mit
einer Regelungseinrichtung mit Regelungsalgorithmen für den vorbestimmten Teilregelungsprozess,
einer Prozessschnittstelle zu dem Regelungsprozess zum Übermitteln von Regelungsgrößen zwischen der Einrichtung und dem Regelungsprozess, **gekennzeichnet durch**
eine Verbindungseinrichtung zum automatischen Herstellen einer Verbindung zu einer weiteren regelungstechnischen Einrichtung zur Regelung eines anderen vorbestimmten Teilprozesses des Regelungsprozesses mit Hilfe von vorgegebenen Verbindungspunkten gemäß vorbestimmten Funktionen und Verbindungsvorschriften der Verbindungspunkte.

2. Einrichtung gemäß Anspruch 1, zusätzlich mit einer Speichereinrichtung zum Speichern der vorbestimmten Funktionen und Verbindungsvorschriften mittels einer Verbindungstabelle für jeden der Verbindungspunkte.

3. Einrichtung gemäß Anspruch 2, wobei die Speichereinrichtung in der Verbindungstabelle zusätzlich Informationen zu bestehenden Verbindungen des jeweiligen Verbindungspunkts speichert.

4. Einrichtung gemäß einem der Ansprüche 1 bis 3, wobei die Verbindungseinrichtung zusätzlich eingerichtet ist, eine bestehende Verbindung zu einer anderen Einrichtung zu trennen.

5. Einrichtung gemäß einem der Ansprüche 1 bis 4, zusätzlich mit einer Steuerungsschnittstelle zur Kommunikation zwischen der Einrichtung und einem Konfigurationswerkzeug zur Konfiguration der Einrichtung.

## Claims

1. Control system for controlling a predetermined subprocess of a control process, having
a control device with control algorithms for the predetermined control subprocess,
a process interface to the control process for the purpose of transmitting control variables between the device and the control process, **characterized by**
a connecting device for automatically producing a connection to a further control system for the purpose of controlling another predetermined subprocess of the control process with the aid of prescribed connection points in accordance with predetermined functions and connection rules of the connection points.

2. System according to Claim 1, additionally having a memory device for storing the predetermined functions and connection rules by means of a connection table for each of the connection points.

3. System according to Claim 2, in which the memory device additionally stores in the connection table information relating to existing connections of the respective connection point.

4. System according to one of Claims 1 to 3, in which the connecting device is additionally set up to separate an existing connection to another system.

5. System according to one of Claims 1 to 4, additionally having a control interface for the purpose of communication between the system and a configuration tool for configuring the system.

## Revendications

1. Dispositif de commande destiné à commander un sous-processus prédéterminé d'un processus de commande, comprenant
un dispositif de commande comprenant des algorithmes de commande destinés au sous-processus de commande,
une interface de processus avec le processus de commande pour la transmission de variables de commande entre le dispositif et le processus de commande, **caractérisé par**
un dispositif de connexion destiné à l'établissement automatique d'une connexion à un autre dispositif de commande destiné à commander un autre sous-processus prédéterminé du processus de commande à l'aide de points de connexion prédéfinis conformément à des fonctions et à des instructions de connexion prédéterminées des points de connexion.

2. Dispositif selon la revendication 1, comprenant en outre un dispositif de mémoire destiné à stocker les fonctions et les instructions de connexion prédéterminées au moyen d'une table de connexions pour chacun des points de connexion.

3. Dispositif selon la revendication 2, dans lequel le dispositif de mémoire stocke dans la table de connexions des informations supplémentaires concernant des connexions existantes du point de connexion respectif.

4. Dispositif selon l'une quelconque des revendications 1 à 3, dans lequel le dispositif de connexion est en outre conçu pour interrompre une connexion existante à un autre dispositif.

5. Dispositif selon l'une quelconque des revendications 1 à 4, comprenant en outre une interface de commande pour la communication entre le dispositif et un outil de configuration destiné à configurer le dispositif.
